# EUROPÄISCHE PATENTSCHRIFT

(11) **EP 2 731 813 B1**
(45) Veröffentlichungstag und Bekanntmachung des Hinweises auf die Patenterteilung: **21.10.2015**
(21) Anmeldenummer: 12730394.9
(22) Anmeldetag: 27.06.2012
(51) Int. Cl.: B60H 1/00, B60K 6/42

(54) **VERFAHREN ZUM BETREIBEN EINES KRAFTWAGENS IN EINEM SPORTBETRIEBSMODUS**
METHOD FOR OPERATING A MOTOR VEHICLE IN A SPORTS OPERATING MODE
PROCÉDÉ D'EXPLOITATION D'UN VÉHICULE EN MODE SPORTIF

(30) Priorität: 16.07.2011 DE 102011107540
(43) Veröffentlichungstag der Anmeldung: 21.05.2014
(73) Patentinhaber: Audi AG, 85045 Ingolstadt (DE)
(72) Erfinder: MEITINGER, Karl-Heinz, 81667 München (DE); BAUER, Florian, 85072 Eichstätt (DE); ULLMANN, Stefan, 80797 München (DE)
(74) Vertreter: Herbst, Matthias Heinz
(86) Internationale Anmeldenummer: PCT/EP2012/002692
(87) Internationale Veröffentlichungsnummer: WO 2013/010622

(56) Entgegenhaltungen:
- DE-A1-102009 059 982
- US-A1- 2008 251 235
- US-A1- 2010 212 338

## Beschreibung

Die Erfindung betrifft ein Verfahren zum Betreiben eines Kraftwagens mit zumindest einer elektrischen Antriebskomponente, welche über zumindest einen Kühlkreislauf gekühlt wird.

Die Leistungsabgabe elektrisch betriebener Kraftwagen wird wesentlich von der thermischen Belastbarkeit der elektrischen Antriebskomponenten, wie Motor, Leistungselektronik, Gleichspannungswandler, Batterie und dergleichen bestimmt. Üblicherweise ist daher wenigstens ein Kühlmittelkreislauf vorgesehen, mittels welchem Wärme von solchen Komponenten abgeführt und mittels eines Wärmetauschers an die Umgebungsluft abgegeben werden kann. Um eine zusätzliche Kühlung zu gewährleisten, ist dieser Kühlmittelkreislauf zudem oft mit einem Kältemittelkreislauf des Kraftwagens gekoppelt.

Beim Betreiben des Kältemittelkreislaufs wird ein Kühlmittel verdichtet, dabei verflüssigt und anschließend über einen Umgebungswärmetauscher abgekühlt. Ein Teilvolumenstrom des Kühlmittels wird in einem ersten Verdampfer wieder in die Gasphase überführt, wodurch es sich weiter abkühlt. Dieser Verdampfer wird zur Innenraumklimatisierung des Kraftwagens von Luft durchströmt, welche nach Austritt aus dem Verdampfer in den Kraftwageninnenraum geleitet wird. Ein weiterer Teilvolumenstrom wird durch einen zweiten Verdampfer geleitet, welcher in thermischem Kontakt mit dem Kühlmittelkreislauf zum Kühlen der elektrischen Antriebskomponenten steht. Hierdurch ist es möglich, eine Vorlauftemperatur des Kühlmittels im Kühlmittelkreislauf tiefer als die Umgebungstemperatur einzustellen.

Werden die elektrischen Antriebskomponenten besonders stark beansprucht, beispielsweise in einem Sport- oder Rennbetriebsmodus des Kraftwagens, so ist jedoch auch dies nicht immer ausreichend, um eine hinreichende Kühlung der elektrischen Antriebskomponenten zu gewährleisten. Diese können daher nur mit einer vorgegebenen Dauerleistung betrieben werden, die geringer ist, als die maximal mögliche Spitzenbetriebsleistung. Kurzfristige Überschreitungen der Dauerleistung sind zwar möglich, sobald die elektrischen Komponenten eine vorgegebene Maximaltemperatur erreichen, muss die Leistung jedoch wieder reduziert werden.

Die US 2010/0212338 A1 offenbart ein Verfahren zum Einstellen einer Temperatur einer elektrischen Speichereinrichtung, welche mit einem Antriebsstrang eines Elektrofahrzeugs gekoppelt ist. Im Rahmen des Verfahrens wird ein Betriebszustand des Elektrofahrzeugs überwacht. Ist das Elektrofahrzeug deaktiviert, so wird eine momentane Umgebungstemperatur ermittelt. Ferner wird die momentane Umgebungstemperatur mit einer vorgebbaren Temperatur verglichen. Es wird ein Kühlmittel durch einen Kühlmittelkreislauf der elektrischen Speichereinrichtung gefördert, wenn die momentane Umgebungstemperatur geringer als die vorgebbare Temperatur ist. Ist die momentane Umgebungstemperatur größer als die vorgebbare Temperatur, so unterbleibt das Fördern des Kühlmediums.

Schließlich ist der US 2008/0251235 A1 ein Elektrofahrzeug mit einer Wärmemanagementeinrichtung als bekannt zu entnehmen. Die Wärmemanagementeinrichtung umfasst einen einer elektrische Speichereinrichtung des Elektrofahrzeugs zugeordneten Kühlkreislauf zum Kühlen der elektrischen Speichereinrichtung.

Der vorliegenden Erfindung liegt somit die Aufgabe zugrunde, ein Verfahren der eingangs genannten Art bereitzustellen, welche einen möglichst langen Betrieb des Kraftwagens bei besonders hoher Leistungsabgabe ermöglicht.

Diese Aufgabe wird durch ein Verfahren mit den Merkmalen des Patentanspruchs 1 gelöst.

Bei einem solchen Verfahren wird zumindest eine elektrische Antriebskomponente des Kraftwagens mittels wenigstens eines Kühlkreislaufs gekühlt. Dieser ist zunächst zur passiven Kühlung ausgelegt, kann die aufgenommene Wärme also lediglich über einen Umgebungswärmetauscher an die Umgebungsluft abgeben. Um die Kühlleistung zu verbessern, ist der wenigstens eine Kühlkreislauf thermisch mit einem Kältemittelkreislauf des Kraftwagens gekoppelt. Dieser ist aktiv gekühlt, verfügt also über einen Kältemittelverdichter, mindestens einen Kondensator, und mindestens einen Verdampfer.

Durch die thermische Koppelung der beiden Kreisläufe kann ein Teil der Kühlleistung des Kältemittelkreislaufs verwendet werden, um eine Vorlauftemperatur des Kühlmittels in dem wenigstens einen Kältemittelkreislauf, also die Temperatur, mit der das Kühlmittel in die zu kühlenden Komponenten eintritt, unter die Umgebungstemperatur abzusenken.

Erfindungsgemäß ist vorgesehen, dass mittels eines Betätigungselements durch den Fahrer eine Auswahl zwischen einem ersten, als Normalbetriebsmodus ausgelegten Betriebsmodus und einem zweiten, als Sportbetriebsmodus ausgelegten Betriebsmodus getroffen und in dem ersten Betriebsmodus des Kraftwagens die Vorlauftemperatur auf einen ersten Wert und in dem zweiten Betriebsmodus auf einen zweiten Wert eingestellt wird, wobei der zweite Wert kleiner ist, als der erste.

Die tiefere Vorlauftemperatur im zweiten Betriebsmodus ermöglicht es, die elektrischen Antriebskomponenten des Kraftwagens bei höherer Dauerleistung bzw. für eine längere Zeit mit Spitzenbetriebsleistung zu betreiben als im ersten Betriebsmodus, da die im Betrieb anfallende Wärme besser abgeführt werden kann. Ferner wird durch die verbesserte Kühlung die Lebensdauer der Antriebskomponenten erhöht.

Vorzugsweise werden zwei Kühlmittelkreisläufe verwendet, in welchen mittels des Kältemittelkreislaufs jeweilige Vorlauftemperaturen eingestellt werden. Hierdurch können unterschiedliche Kühlungsanforderungen verschiedener Antriebskomponenten besonders gut erfüllt werden. Es ist dabei zweckmäßig, wenn sich die Vorlauftemperaturen der wenigstens zwei Kühlmittelkreisläufe für einen jeweiligen Betriebsmodus des Kraftwagens unterscheiden, so dass die jeweils gekühlten Komponenten auf ihre jeweiligen optimalen Betriebstemperaturen gebracht werden können.

In einer weiteren bevorzugten Ausführungsform ist einer der Kühlmittelkreisläufe ausschließlich zum Kühlen bzw. Temperieren einer Hochvoltbatterie des Kraftwagens vorgesehen. Deren Anforderungen an die Betriebstemperatur unterscheiden sich nämlich deutlich von denen anderer Antriebskomponenten. Insbesondere kann im Fall der Hochvoltbatterie auch ein Aufheizen notwendig sein, beispielsweise im Fall tiefer Außentemperaturen.

Ein weiterer Kühlmittelkreislauf findet vorzugsweise zum Kühlen einer Leistungselektronik und/oder eines Gleichstromwandlers und/oder eines Batterieladegeräts und/oder einer elektrischen Antriebsmaschine und/oder eines Getriebes Verwendung. Bei diesen Komponenten ist üblicherweise keine Aufheizung bei tiefen Umgebungstemperaturen notwendig, so dass hier auf eine Koppelung mit einer Heizvorrichtung des Kraftwagens verzichtet werden kann.

Bei einer besonders bevorzugten Ausführungsform der Erfindung wird im zweiten Betriebsmodus die maximale Kühlleistung des Kältemittelkreislaufs zum Senken der Vorlauftemperatur des wenigstens einen Kühlmittelkreislaufs verwendet. Mit anderen Worten steht in diesem Betriebsmodus keine Kühlleistung mehr für die Innenraumklimatisierung des Kraftwagens zur Verfügung. Durch diesen Komfortverzicht kann jedoch eine besonders große Leistungssteigerung der Antriebskomponenten realisiert werden, so dass sich dieser Betriebsmodus insbesondere für den sportlichen oder Rennbetrieb des Kraftwagens eignet und gegebenenfalls in ein entsprechendes Sport- bzw. Rennprogramm des Kraftwagens integriert werden kann.

Vorzugsweise wird ferner in zumindest einem Kühlmittelkreislauf ein Gesamtvolumenstrom an Kühlmittel in zumindest zwei Teilvolumenströme aufgeteilt, mittels welcher jeweils unterschiedliche Antriebskomponenten gekühlt werden. Hierdurch kann auch bei gleicher Vorlauftemperatur für die beiden Teilvolumenströme eine unterschiedliche Kühlleistung für unterschiedliche Antriebskomponenten erzielt werden, ohne dass weitere, separate Kühlmittelkreisläufe notwendig werden.

Besonders zweckmäßig ist es dabei, wenn in den beiden Betriebsmodi ein jeweils unterschiedliches Verhältnis der Teilvolumenströme zueinander eingestellt wird. Hierdurch kann der unterschiedlichen Leistungsabhängigkeit des Kühlungsbedarfs verschiedener Komponenten Rechnung getragen werden. Beispielsweise benötigen Komponenten, die eine relativ geringe thermische Masse aufweisen, wie die Leistungselektronik, bei hoher Belastung relativ mehr Kühlung als Komponenten mit hoher thermischer Masse, wie beispielsweise das Getriebe. In dieser Ausführungsform der Erfindung kann daher bei sportlichem Betrieb des Kraftwagens der Leistungselektronik und ähnlichen Komponenten ein erhöhter Teilvolumenstrom des Kühlmittels zur Verfügung gestellt werden. Dadurch wird verhindert, dass die geringe thermische Masse solcher Komponenten als begrenzender Faktor für die maximal erreichbare Dauerleistung des Kraftwagens wirkt.

Die Erfindung betrifft ferner einen Kraftwagen, welcher zur Durchführung des beschriebenen Verfahrens ausgelegt ist. Ein solcher Kraftwagen weist ein Betätigungselement auf, mittels welchem durch einen Fahrer eine Auswahl zwischen dem ersten und dem zweiten Betriebsmodus zu tätigen ist. Die verstärkte Kühlung der Komponenten des elektrischen Antriebs wird also auf einen Fahrerwunsch hin bereitgestellt, so dass die Vorlauftemperaturen der Kühlmittelkreisläufe bereits vor der tatsächlichen erhöhten Leistungsanforderung an den Antrieb abgesenkt werden können.

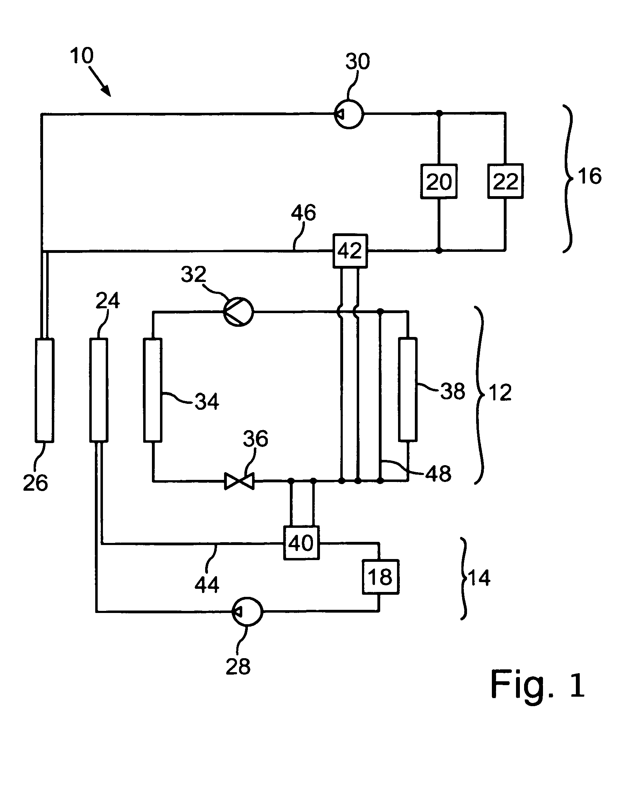

Im Folgenden werden die Erfindung und ihre Ausführungsformen anhand der Zeichnung näher erläutert. Die einzige Figur zeigt hierbei eine schematische Darstellung eines Kühlsystems eines Kraftwagens zur Verwendung mit einem Ausführungsbeispiel des erfindungsgemäßen Verfahrens.

Ein insgesamt mit 10 bezeichnetes Kühlsystem eines Kraftwagens umfasst einen Kältemittelkreislauf 12 sowie zwei Kühlmittelkreisläufe 14, 16 zum Kühlen von Komponenten 18, 20, 22 eines elektrischen Antriebs des Kraftwagens. Der erste Kühlmittelkreislauf 14 dient dabei ausschließlich zur Kühlung einer Hochvoltbatterie 18. Bei den vom zweiten Kühlmittelkreislauf 16 gekühlten Komponenten 20, 22 kann es sich beispielsweise um eine Leistungselektronik, einen Gleichspannungswandler, eine elektrische Antriebsmaschine oder ein Getriebe handeln. Die Verwendung von zwei getrennten Kühlmittelkreisläufen 14, 16 für die Hochvoltbatterie 18 und die weiteren Komponenten 20, 22 ist zweckmäßig, da sich die optimale Betriebstemperatur der Hochvoltbatterie 18 deutlich von derjenigen der Komponenten 20, 22 unterscheidet.

Jeder der Kühlmittelkreisläufe 14, 16 verfügt über einen Wärmetauscher 24, 26, der im Fahrbetrieb des Kraftwagens von Fahrtwind durchströmt wird, sowie über eine Umwälzpumpe 28, 30 zum Umwälzen des Kühlmittels. In den Wärmetauschern 24, 26 kann sich das nach Durchlaufen der Komponenten 18, 20, 22 erhitzte Kühlmittel wieder abkühlen und die aufgenommene Wärme an die Umgebung abgeben.

Im Kältemittelkreislauf 12 wird das Kältemittel zunächst durch einen Kompressor 32 verdichtet und durchströmt anschließend ebenfalls einen dem Fahrtwind ausgesetzten Wärmetauscher 34. Das verdichtete und abgekühlte Kältemittel wird anschließend mittels eines Expansionsventils 36 entspannt, wobei es sich weiter abkühlt. In einem Verdampfer 38 nimmt das Kältemittel schließlich Wärme aus einem der Innenraumklimatisierung des Kraftwagens dienenden Luftstrom auf und kühlt diesen ab. Nach Durchlaufen des Verdampfers wird das Kältemittel schließlich wieder zum Kompressor 32 geleitet.

Neben der Innenraumklimatisierung dient der Kältemittelkreislauf 12 auch der Vorkühlung des Kühlmittels in den Kühlmittelkreisläufen 14 und 16. Hierzu sind weitere Verdampfer 40, 42 vorgesehen, durch welche das Kältemittel des Kältemittelkreislaufs geleitet werden kann, um das Kühlmittel in jeweiligen Vorlaufleitungen 44, 46 der Kühlmittelkreisläufe 14, 16 abzukühlen, bevor es die Komponenten 18, 20, 22 erreicht. Die jeweilige Flussrate des Kältemittels durch die Verdampfer 38, 40, 42 kann dabei für jeden der Verdampfer individuell mittels in der Figur nicht dargestellter Ventile eingestellt werden.

Gerade bei elektrisch angetriebenen Kraftwagen wird die maximale Leistungsabgabe des Antriebs durch die thermische Belastbarkeit der Komponenten 18, 20, 22 des Antriebs - und damit durch die Kühlleistung der Kühlmittelkreisläufe 14, 16 begrenzt. Durch die zusätzliche Vorkühlung des Kühlmittels in den Vorlaufleitungen 44, 46 kann diese Kühlleistung erhöht werden, so dass der Antrieb mehr Leistung bereitstellen kann.

Aus Komfortgründen wird im Normalbetrieb des Kraftwagens das Kältemittel des Kältemittelkreislaufs 12 vorwiegend oder ausschließlich durch den Verdampfer 38 geleitet, um eine optimale Innenraumklimatisierung zu ermöglichen. Wünscht der Fahrer des Kraftwagens jedoch ein besonders sportliches Fahrverhalten, so kann er mittels eines Bedienungselements im Cockpit des Kraftwagens einen Sport- oder Rennbetriebsmodus auswählen. Ein Steuergerät des Kraftwagens empfängt eine entsprechendes Signal, und steuert Pumpen und Ventile des Kühlsystems so an, dass in diesem Betriebsmodus des Kraftwagens das Kältemittel vorwiegend durch die Verdampfer 40, 42 geleitet wird, um so das Kühlmittel in den Vorlaufleitungen 44, 46 besonders stark vorzukühlen. Gegebenenfalls kann der Verdampfer 38 für die Innenraumklimatisierung in diesem Betriebsmodus durch eine Bypassleitung 48 vollständig überbrückt werden. Die besonders gute Wärmeabfuhr aus den Komponenten 18, 20, 22 ermöglicht es, im Normalbetrieb geltenden Höchstleistungen zu überschreiten und das gewünschte sportliche Verhalten des Kraftwagens zu realisieren.

Zusätzlich zum Absenken der Vorlauftemperatur des Kühlmittels in den Kühlmittelkreisläufen 14, 16 können im Sportbetriebsmodus weitere Maßnahmen zur Verbesserung der Kühlung getroffen werden. So ist es beispielsweise möglich, die parallel von Kühlmittel durchströmten Komponenten 20, 22 im Kühlmittelkreislauf 16 mit unterschiedlichen Volumenströmen von Kühlmittel zu versorgen. Handelt es sich beispielsweise bei der Komponente 20 um ein Gerät mit besonders geringer thermischer Masse, wie eine Leistungselektronik, so würde diese bei hoher Belastung schneller überhitzen als die Komponente 22. Um dem vorzubeugen, kann im Sportbetriebsmodus der die Komponente 20 kühlende Teilvolumenstrom an Kühlmittel gegenüber dem die Komponente 22 kühlenden Teilvolumenstrom erhöht werden, um ein Überhitzen der Komponente 20 zu verhindern.

Insgesamt wird so ein Verfahren geschaffen, welches bei Auswahl eines Sportbetriebsmodus eine besonders effiziente Kühlung der Komponenten 18, 20, 22 des elektrischen Antriebs des Kraftwagens ermöglicht. In diesem Betriebsmodus kann daher eine gegenüber dem Normalbetrieb deutlich erhöhte Antriebsleistung verwirklicht werden.

## Patentansprüche

1. Verfahren zum Betreiben eines Kraftwagens mit zumindest einer elektrischen Antriebskomponente (18, 20, 22), welche über zumindest einen Kühlmittelkreislauf (14, 16) gekühlt wird, welcher thermisch mit einem Kältemittelkreislauf (12) gekoppelt ist,
**dadurch gekennzeichnet, dass**
mittels eines Betätigungselements durch den Fahrer eine Auswahl zwischen einem ersten, als Normalbetriebsmodus ausgelegten Betriebsmodus und einem zweiten, als Sportbetriebsmodus ausgelegten Betriebsmodus getroffen und in dem ersten Betriebsmodus des Kraftwagens durch aktive Kühlung mittels des Kältemittelkreislaufs (12) eine Vorlauftemperatur eines Kühlmittels des zumindest einen Kühlmittelkreislaufs (14, 16) auf einen ersten Wert eingestellt wird, und in dem zweiten Betriebsmodus des Kraftwagens durch aktive Kühlung mittels des Kältemittelkreislaufs (12) die Vorlauftemperatur des Kühlmittels des zumindest einen Kühlmittelkreislaufs (14, 16) auf einen zweiten, kleineren Wert eingestellt wird.

2. Verfahren nach Anspruch 1,
**dadurch gekennzeichnet, dass**
in wenigstens zwei Kühlmittelkreisläufen (14, 16) mittels des Kältemittelkreislaufs (12) jeweilige Vorlauftemperaturen eingestellt werden.

3. Verfahren nach Anspruch 2,
**dadurch gekennzeichnet, dass**
die jeweiligen Vorlauftemperaturen der beiden Kühlmittelkreisläufe (14, 16) unterschiedlich voneinander sind.

4. Verfahren nach einem der Ansprüche 2 oder 3,
**dadurch gekennzeichnet, dass**
ein Kühlmittelkreislauf (14) ausschließlich zum Kühlen einer Hochvoltbatterie (18) des Kraftwagens verwendet wird.

5. Verfahren nach einem der Ansprüche 2 bis 4,
**dadurch gekennzeichnet, dass**
ein weiterer Kühlmittelkreislauf (16) des Kraftwagens zum Kühlen einer Leistungselektronik und/oder eines Gleichstromwandlers und/oder eines Batterieladegeräts und/oder einer elektrischen Antriebsmaschine und/oder eines Getriebes verwendet wird.

6. Verfahren nach einem der Ansprüche 1 bis 5,
**dadurch gekennzeichnet, dass**
im zweiten Betriebsmodus die maximale Kühlleistung des Kältemittelkreislaufs (12) zum Senken der Vorlauftemperatur des wenigstens einen Kühlmittelkreislaufs (14, 16) verwendet wird.

7. Verfahren nach einem der Ansprüche 1 bis 6,
**dadurch gekennzeichnet, dass**
in zumindest einem Kühlmittelkreislauf (16) ein Gesamtvolumenstrom an Kühlmittel in zumindest zwei Teilvolumenströme aufgeteilt wird, mittels welcher jeweils unterschiedliche Antriebskomponenten (20, 22) gekühlt werden.

8. Verfahren nach Anspruch 7,
**dadurch gekennzeichnet, dass**
in den beiden Betriebsmodi ein jeweils unterschiedliches Verhältnis der Teilvolumenströme zueinander eingestellt wird.

9. Kraftwagen mit einem Betätigungselement, mittels welchem durch einen Fahrer eine Auswahl zwischen einem ersten und einem zweiten Betriebsmodus zu tätigen ist,
**dadurch gekennzeichnet, dass**
der Kraftwagen zur Durchführung eines Verfahrens nach einem der Ansprüche 1 bis 8 ausgelegt ist.

## Claims

1. Method for operating a motor vehicle comprising at least one electric drive component (18, 20, 22), which is cooled by means of at least one coolant circuit (14, 16) which is thermally connected to a refrigerant circuit (12), **characterised in that** by means of an activating element the driver can select either a first operating mode, defined as the normal operating mode, or a second operating mode, defined as the sports operating mode, and in the first operating mode of the motor vehicle a flow temperature of a coolant of the at least one coolant circuit (14, 16) is set to a first value by means of active cooling by the refrigerant circuit (12), and in the second operating mode of the motor vehicle the flow temperature of the coolant of the at least one coolant circuit (14, 16) is set to a second, lower value by means of active cooling by the refrigerant circuit (12).

2. Method according to claim 1, **characterised in that** respective flow temperatures are set in at least two coolant circuits (14, 16) by means of the refrigerant circuit (12).

3. Method according to claim 2, **characterised in that** the respective flow temperatures of the two coolant circuits (14, 16) are different from one other.

4. Method according to either claim 2 or claim 3, **characterised in that** one coolant circuit (14) is used exclusively for cooling a high-voltage battery (18) of the motor vehicle.

5. Method according to any one of claims 2 to 4, **characterised in that** an additional coolant circuit (16) of the motor vehicle is used for cooling power electronics and/or a DC converter and/or a battery charger and/or an electric drive unit and/or a transmission.

6. Method according to any one of claims 1 to 5, **characterised in that** in the second operating mode the maximum cooling power of the refrigerant circuit (12) is used for decreasing the flow temperature of the at least one coolant circuit (14, 16).

7. Method according to any one of claims 1 to 6, **characterised in that** in at least one coolant circuit (16) a total volume flow of coolant is divided into at least two partial volume flows, which are each used to cool different drive components (20, 22).

8. Method according to claim 7, **characterised in that** in the two operating modes a different ratio is set between the two partial volume flows.

9. Motor vehicle with an activing element, by means of which a driver selects between a first operating mode and a second operating mode, **characterised in that** the motor vehicle is designed to perform a method according to any one of claims 1 to 8.

## Revendications

1. Procédé pour exploiter un véhicule automobile avec au moins un composant d'entraînement électrique (18, 20, 22) qui est refroidi par l'intermédiaire d'au moins un circuit de refroidissement (14, 16) qui est couplé thermiquement à un circuit frigorifique (12),
**caractérisé en ce qu'**une sélection est effectuée par le conducteur au moyen d'un élément d'actionnement entre un premier mode de fonctionnement présenté comme mode de fonctionnement normal et un deuxième mode de fonctionnement présenté comme mode de fonctionnement sportif et **en ce que**, dans le premier mode de fonctionnement du véhicule automobile, une température d'entrée d'un fluide de refroidissement de l'au moins un circuit de refroidissement (14, 16) est réglée sur une première valeur par refroidissement actif au moyen du circuit frigorifique (12) et, dans le deuxième mode de fonctionnement du véhicule automobile, la température d'entrée du fluide de refroidissement de l'au moins un circuit de refroidissement (14, 16) est réglée sur une deuxième valeur, plus petite, par refroidissement actif au moyen du circuit frigorifique (12).

2. Procédé selon la revendication 1, **caractérisé en ce que** des températures d'entrée respectives sont réglées dans au moins deux circuits de refroidissement (14, 16) au moyen du circuit frigorifique (12).

3. Procédé selon la revendication 2, **caractérisé en ce que** les températures d'entrée respectives des deux circuits de refroidissement (14, 16) sont différentes l'une de l'autre.

4. Procédé selon l'une des revendications 2 ou 3, **caractérisé en ce qu'**un circuit de refroidissement (14) est utilisé exclusivement pour le refroidissement d'une batterie à haute tension du véhicule automobile.

5. Procédé selon l'une des revendications 2 à 4, **caractérisé en ce qu'**un autre circuit de refroidissement (16) du véhicule automobile est utilisé pour le refroidissement d'une électronique de puissance et/ou d'un transformateur en courant continu et/ou d'un appareil de rechargement de batterie et/ou d'un moteur électrique et/ou d'une transmission.

6. Procédé selon l'une des revendications 1 à 5, **caractérisé en ce que**, dans le deuxième mode de fonctionnement, la puissance de refroidissement maximale du circuit frigorifique (12) est utilisée pour abaisser la température d'entrée de l'au moins un circuit de refroidissement (14, 16).

7. Procédé selon l'une des revendications 1 à 6, **caractérisé en ce que**, dans au moins un circuit de refroidissement (16), un débit total de fluide de refroidissement est divisé en au moins deux débits partiels au moyen desquels différents composants d'entraînement (20, 22) sont refroidis.

8. Procédé selon la revendication 7, **caractérisé en ce que**, dans les deux modes de fonctionnement, un rapport respectivement différent des débits partiels l'un par rapport à l'autre est réglé.

9. Véhicule automobile avec un élément d'actionnement au moyen duquel une sélection doit être effectuée par un conducteur entre un premier mode de fonctionnement et un deuxième mode de fonctionnement,
**caractérisé en ce que** le véhicule automobile est conçu pour la mise en oeuvre du procédé selon l'une des revendications 1 à 8.
